# EUROPEAN PATENT SPECIFICATION

(11) **EP 2 402 285 B1**
(45) Date of publication and mention of the grant of the patent: **29.11.2017**
(21) Application number: 10008976.2
(22) Date of filing: 30.08.2010
(51) Int. Cl.: C04B 35/628

(54) **Method for fabricating composite material comprising nano carbon and metal or ceramic**
Verfahren zur Herstellung eines Verbundmaterials, das Nanokohlenstoff und Metall oder Keramik umfasst
Procédés de fabrication de matériau composite comportant du nano carbone et métal ou céramique

(30) Priority: 23.06.2010 KR 20100059756
(43) Date of publication of application: 04.01.2012
(60) Divisional application: 17171620.2
(73) Proprietor: KOREA INSTITUTE OF SCIENCE AND TECHNOLOGY, Seongbook-gu Seoul 136-791 (KR)
(72) Inventor: Han, Jun Hyun, Deokyang-Gu Goyang, Gyeonggi-Do (KR); Jee, Kwang Koo, Gangnam-Gu Seoul (KR); Byun, Ji Young, Yongsan-Gu Seoul (KR); Oh, Se il, Gyeyang-Gu Incheon (KR); Lim, Jun Young, Dobong-Gu Seoul (KR)
(74) Representative: Bill, Burkart Hartmut

(56) References cited:
- K.C.CHIN ET AL: "Gold and silver coated carbon nanotubes: An improved broad-band optical limiter", CHEMICAL PHYSICS LETTERS, vol. 409, no. 1-3, 20 June 2005 (2005-06-20), pages 85-88, XP002619434, DOI: 10.1016/j.cplett.2005.04.092
- SANDEEP MANI TRIPATHI ET AL: "synthesis and study of applications of metal coated carbon nanotubes", INTERNATIONAL JOURNAL OF ADVANCE SCIENCE AND TECHNOLOGY, vol. 16, 1 March 2010 (2010-03-01), pages 31-41, XP002619435,
- CHEMICAL ABSTRACTS, CHEMICAL ABSTRACTS SERVICE (C A S), US, 2 December 1991 (1991-12-02), XP000376169, ISSN: 0009-2258
- CHEMICAL ABSTRACTS, CHEMICAL ABSTRACTS SERVICE (C A S), US, 8 February 1993 (1993-02-08), XP000352570, ISSN: 0009-2258
- CHEMICAL ABSTRACTS, CHEMICAL ABSTRACTS SERVICE (C A S), US, 6 August 1979 (1979-08-06), XP000318902, ISSN: 0009-2258
- CHEMICAL ABSTRACTS, CHEMICAL ABSTRACTS SERVICE (C A S), US, 7 October 1991 (1991-10-07), XP000318085, ISSN: 0009-2258
- CHEMICAL ABSTRACTS, CHEMICAL ABSTRACTS SERVICE (C A S), US, 21 October 1991 (1991-10-21), XP000286499, ISSN: 0009-2258
- CHEMICAL ABSTRACTS, 26 November 1990 (1990-11-26), XP000190189, ISSN: 0009-2258
- CHEMICAL ABSTRACTS, 9 September 1985 (1985-09-09), XP000186259, ISSN: 0009-2258
- CHEMICAL ABSTRACTS, 11 December 1989 (1989-12-11), XP000181385, ISSN: 0009-2258
- CHEMICAL ABSTRACTS, 25 December 1989 (1989-12-25), XP000153426, ISSN: 0009-2258
- CHEMICAL ABSTRACTS, 13 November 1989 (1989-11-13), XP000152619, ISSN: 0009-2258
- CHEMICAL ABSTRACTS, 5 February 1990 (1990-02-05), XP000152099, ISSN: 0009-2258
- A. TELLO ET AL: "The synthesis of hybrid nanostructures of gold nanoparticles and carbon nanotubes and their transformation to solid carbon nanorods", CARBON, vol. 46, 1 May 2008 (2008-05-01), pages 884-889, XP022655604,
- N. ALEXEYEVA ET AL: "Electrochemical and surface characterisation of gold nanoparticle decorated multi-walled carbon nanotubes", APPLIED SURFACE SCIENCE, vol. 256, 1 March 2010 (2010-03-01), pages 3040-3046, XP026932353,
- S. Y. MOON ET AL: "Easy synthesis of a nano structured hybrid array consisting of gold nanoparticles and carbon nanotubes", CARBON, vol. 47, 1 October 2009 (2009-10-01), pages 2924-2932, XP026420993,
- M. PENZA ET AL: "Functional characterisation of carbon nanotube networked films functionalised with tuned loading of Au nanoclusters for gas sensing applications", SENSORS AND ACTUATORS B, vol. 140, 18 June 2009 (2009-06-18), pages 176-184, XP026148981,

## Description

### FIELD OF THE INVENTION

The present invention relates to a method for fabricating a composite material comprising nano carbon and metal or ceramic, and particularly, to a method for fabricating a composite material in which metal or ceramic particles are evenly distributed on a surface of nano carbon.

### BACKGROUND OF THE INVENTION

Carbon nanotube or carbon nano fiber exhibits a high thermal conductivity and a superior mechanical property, so it may be coupled to an existing metal to contribute to implementation of high performance, lightweight and size reduction in various fields such as electrical fields, electronic fields, vehicle-related fields and the like. Consequently, active researches for a nano carbon composite material using carbon nanotubes (CNT) or carbon nano fibers (CNF) as a nano filler have been conducted since many years ago.

However, the carbon nanotubes are attracted to each other due to the van der Waals force, so they are massed (clustered) after fabrication. Also, when the carbon nanotubes are mixed with metallic nano powders so as to make composite powders, the metallic nano powders cannot go through the carbon nanotubes or carbon nano fibers, resulting in a difficulty of uniform mixing.

For solving such problems, in the related art, the metallic powders have been forcibly mixed with the carbon nanotubes or carbon nano fibers by way of a mechanical method such as a ball milling, or a functional group, as a medium, is bonded onto the surfaces of the carbon nanotubes or carbon nano fibers through a chemical treatment using a strong acid, a surfactant or the like so as to be mixed with the metallic powders.

However, such methods may set the massed carbon nanotubes or the like free to some degree, but they are not the basic solutions for separating each of the carbon nanotubes or the like. Accordingly, upon fabricating composite powders, the metallic powders are still in a mixed state with a stack of clustered carbon nanotubes, so, there still remains an impossibility of a uniform mixing between the individual carbon nanotubes and the metallic powders.

N. Alexeyeva et al. describe in "Electrochemical and surface characterisation of gold nanoparticle decorated multi-walled carbon nanotubes", Applied Surface Science 256 (2010) 3040 - 3046 gold nanoparticles supported on multi-walled carbon nanotubes (MWCNTs) prepared by magnetron sputtering technique, wherein MWCNTs were purified by an acid treatment and dispersed in isopropanol. The resulting dispersion was sonicated to give a suspension which was placed on a glassy carbon plate for magnetron sputtering procedure resulting in MWCNTs fixed onto the glassy carbon substrate surface. The nanotubes are covered with a gold layer, the fine grains of which are clearly visible.

A. Tello et al. describe in "The synthesis of hybrid nanostructures of gold nanoparticles and carbon nanotubes and their transformation to solid carbon nanorods", Carbon 46 (2008) 884 - 889, hybrid nanostructures composed of gold nanoparticles and multiwall carbon nanotubes that were prepared by the solvated metal atom dispersion method combined with chemical vapour deposition. Bulk gold and an organic solvent are co-evaporated and later condensed into a frozen matrix. After warming this matrix, a colloid with gold clusters is obtained. These clusters react in the same vessel with the MWCNTs by anchoring themselves to the sidewalls of the tubes. The gold nanoparticles get coated in this process by a thin layer of amorphous carbon.

S. Y. Moon et al. describe in "Easy synthesis of a nanostructured hybrid array consisting of gold nanoparticles and carbon nanotubes", Carbon 47 (2009), 2924 - 2032, a nanostructured hybrid consisting of gold nanoparticles on carbon nanotubes. A gold nanocolloid solution which contained dodecanethiol-capped gold nanoparticles was deposited on a carbon nanotube array and heated at 300 °C for 1 hour under Ar. Good dispersity of gold nanoparticles on carbon nanotubes results from interaction between the thiolate molecules capped on the gold nanoparticles and the N atomes doped into the grown carbon nanotubes.

M. Penza et a. describe in "Functional characterization of carbon nanotube networked films functionalized with tubed loading of Au nanoclusters for gas sensing applications", Sensors and Actuators B 140 (2009), 176 - 184, carbon nanotubes networked films that have been grown by radiofrequency plasma enhanced chemical vapour deposition technology onto alumina substrate. Nanoclusters of gold have been deposited by sputtering onto CNTs networks.

### SUMMARY OF THE INVENTION

Therefore, to overcome the problems of the related art, an object of the present invention is to provide a method for easily fabricating a composite material by preparing composite nano powders, in which nano carbon, such as carbon nanotubes or carbon nano fibers, is uniformly mixed with metallic or ceramic nano powders, and then sintering the composite nano powders.

To achieve this object and other advantages and in accordance with the purpose of the present invention, as embodied and broadly described herein, there is provided a method for fabricating a composite material including (1) coating a uniform metal layer on nano carbon, wherein the uniformly coated metal layer has a thickness in the range of 10 nm to 1 µm; (2) fabricating composite nano powders by performing a thermal treatment for the metal layer-coated nano carbon, wherein metallic nano powders are formed on the surface of the nano carbon after the thermal treatment for the metal layer-coated nano carbon; and (3) sintering the composite nano powders.

In accordance with the present disclosure, the composite nano powder in which metallic or ceramic nano powders are uniformly mixed on the surface of the nano carbon, can be easily fabricated, and such composite nano powder can be sintered so as to fabricate the composite material, in which the nano carbon and the metallic or ceramic powders are uniformly dispersed. Also, the use of the composite material can have a great contribution to implementation of high performance, lightweight and size reduction in electric, electronic and vehicle-related fields. In detail, the composite material can be applied to an electrode material with a high conductivity, a thermal interface with a high thermal conductivity, a structural material with a high strength-to-weight ratio, and the like.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.
In the drawings:

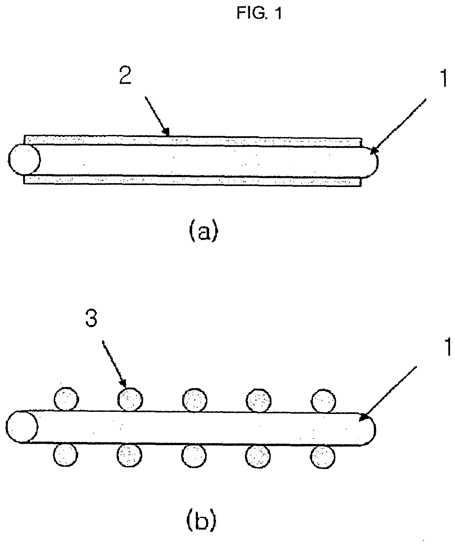

FIG. 1 is a schematic view showing a process of fabricating a composite nano powder according to the present disclosure, wherein FIG. 1(a) shows a view that a metal layer is coated on a surface of nano carbon, and FIG. 1(b) is a view showing that metallic nano powders are formed on the surface of the nano carbon after a thermal treatment for the metal layer-coated nano carbon;

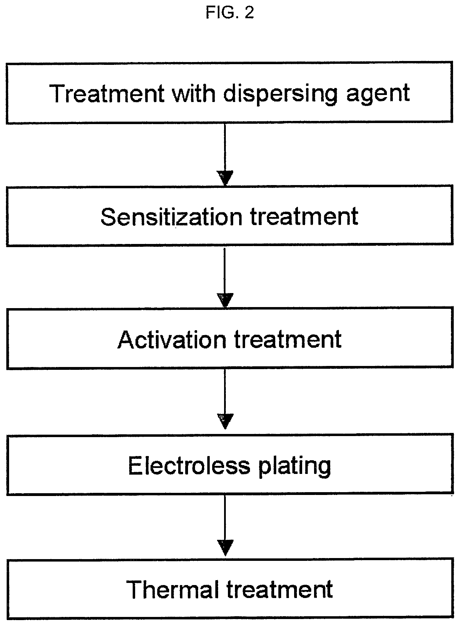

FIG. 2 is a flowchart showing detailed processes for fabricating a composite material according to the present invention;

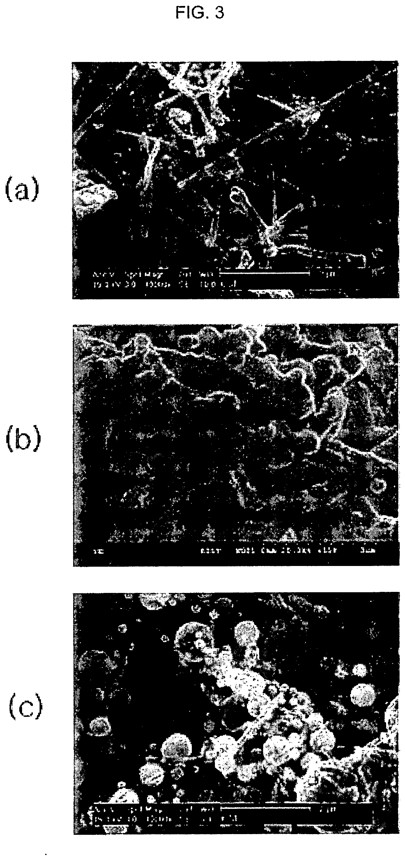

FIG. 3 is an electronic microscopic image at each step of the process of fabricating the composite material in accordance with Example 1, wherein FIG. 3(a) shows carbon nano fibers used, FIG. 3(b) shows that a copper layer is formed on the surfaces of the carbon nano fibers by virtue of an electroless plating, and FIG. 3(c) shows a composite material after the thermal treatment for the carbon nano fibers coated with the copper layer;

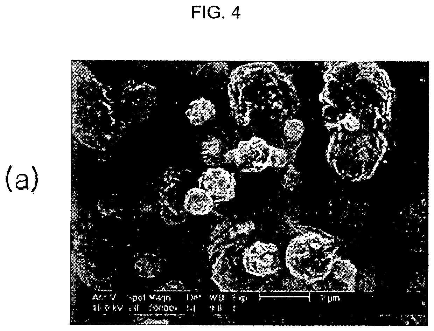

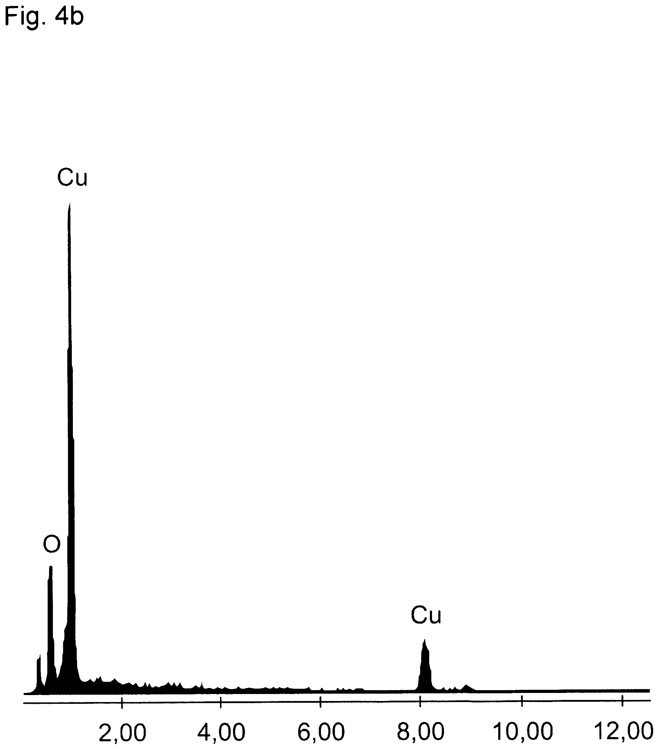

FIG. 4 shows results obtained in accordance with Example 2, wherein FIG. 4(a) is an electronic microscopic image of a composite material, fabricated in Example 2, in which copper oxide powders are uniformly mixed with carbon nano fibers, and FIG. 4(b) is a composition analysis result of the fabricated powder; and

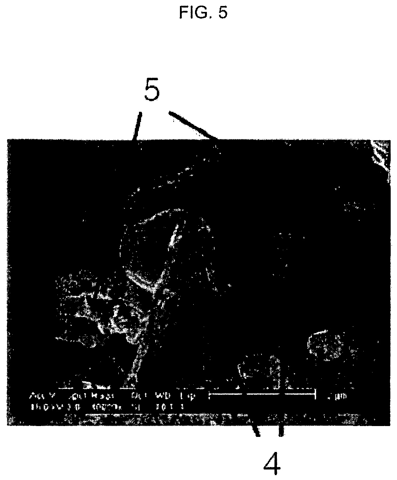

FIG. 5 is an electronic microscopic image of a composite material fabricated according to Example 3.

### DETAILED DESCRIPTION OF THE INVENTION

Description will now be given in detail of the preferred embodiments according to the present invention, with reference to the accompanying drawings.

A method for fabricating a composite material according to the present disclosure may include (1) coating a uniform metal layer on nano carbon, wherein the uniformly coated metal layer has a thickness in the range of 10 nm to 1 µm; (2) fabricating composite nano powders by performing a thermal treatment for the metal layer-coated nano carbon, wherein metallic nano powders are formed on the surface of the nano carbon after the thermal treatment for the metal layer-coated nano carbon; and (3) sintering the composite nano powders. The thermal treatment at step (2) enables the coated metal layer to be in a nanoparticulate state, thereby allowing the nano carbon to be uniformly mixed with metallic nanoparticles or ceramic nanoparticles.

FIG. 1 is a schematic view showing a process of fabricating composite nano powders according to the present disclosure, wherein FIG. 1(a) shows a view that a metal layer is coated on a surface of nano carbon, and FIG. 1(b) is a view showing that metallic nano powders are formed on the surface of the nano carbon after a thermal treatment for the metal layer-coated nano carbon.

Typically, both the nano carbon and the metal layer have a bad wettability, which is, however, utilized in the present disclosure. That is, as shown in FIG. 1(a), when a temperature of the uniformly coated metal layer as shown in FIG. 1(a) rises, copper atoms are allowed to be easily dispersed, so that a contact angle between the copper layer and the nano carbon increases. Accordingly, the coated metal layer is changed into copper particles as shown in FIG. 1(b), resulting in formation of metallic or ceramic nanoparticles on the surface of the nano carbon.

Also, a step of dispersing the nano carbon by using a dispersing agent, an ultrasonic stirring or a combination thereof may further be included prior to step (1). In addition, a step of performing a thermal treatment under a reductive gaseous atmosphere to remove an oxide layer generated on the surfaces of the composite nano powders at step (2) may further be included after step (2).

The thermal treatment after formation of the metal layer may be performed under a vacuum or inactive gaseous atmosphere to create metallic nanoparticles, or performed under nitrogen, oxygen, fluoric or chloric atmosphere to create ceramic nanoparticles. The adjustment of the thermal treatment atmosphere may allow creation of composite nanopowders comprising nano carbon and ceramic nanoparticles as well as composite nanopowders comprising nano carbon and metallic nanoparticles.

A step of adding metallic or ceramic nanoparticles, which are the same as or different from the metal of step (1), may further be included after step (2). The addition of the particles may allow adjustment of the ratio of nano carbon to metal or ceramic in a composite material.

The nano carbon may be at least one selected from a group consisting of carbon nanotube, carbon nanorod, graphene and carbon nano fiber, and the metal may be at least one selected from a group consisting of copper, nickel, gold, silver, platinum, titanium, zinc, manganese and gallium. The metal layer has a thickness in the range of 10 nm to 1 *µ*m.

The volume ratio of the metal to the nano carbon in the composite nano powder may be in the range of 99.99 : 0.01 to 50 : 50. Even if an extremely small amount of the nano carbon is present in the composite nano powders, it may reinforce a matrix material, but if exceeding 50%, a clustering of nano carbon may occur.

The coating of the metal layer may be executed by electroless plating, electroplating, sputtering, deposition or chemical vapor deposition.

The sintering for forming the composite material may use a thermal treatment after cold forming or hot forming, or spark plasma sintering.

Hereinafter, description will be given of detailed examples with reference to the accompanying drawings. However, the detailed description is merely illustrative without limit to the present disclosure.

### Example 1

FIG. 2 is a flowchart showing a detailed process of fabricating carbon nano fiber/copper nano composite powder in accordance with an embodiment of the present invention. This Example 1 was executed by using nano carbon of about 100 nm in diameter and carbon nano fiber of about 10 µm in length.

First, prior to a copper electroless plating, an ultrasonic stirring was executed for the carbon nano fibers by using of a dispersing agent for enhancing the dispersibility of the carbon nano fibers, and polycarboxylic acid-amine was used as the dispersing agent.

Next, a copper electroless plating was used as a method for coating a copper layer. As preprocessing stages of the copper electroless plating treatment, a sensitization treatment was conducted within a tin chloride (SnCl₂) solution and an activation treatment was conducted within a palladium chloride (PdCl₂) solution. An aqueous solution, in which copper sulfate (CuSO₄), ethylendiamine tetraacetic acid, formalin and distilled water were mixed, was used as a plating solution upon the electroless plating process.

After plating, the carbon nano fibers were dried in a vacuum oven. The dried carbon nano fibers were then thermally treated by injecting an argon gas within a quartz glass tube in a vacuum state.

FIG. 3 is an electronic microscopic image at each step of the process of fabricating the composite material in accordance with Example 1, wherein FIG. 3(a) shows carbon nano fibers used, FIG. 3(b) shows that the copper layer is formed on the surfaces of the carbon nano fibers through the electroless plating, and FIG. 3(c) shows a composite material after the thermal treatment of the carbon nano fibers coated with the copper layer. It can be noticed in FIG. 3(C) that composite nano powders, in which the carbon nano fibers and copper nanoparticles were uniformly mixed, were fabricated owing to the uniform formation of the copper nanoparticles on the surfaces of the carbon nano fibers.

### Example 2

Similar to Example 1, the copper layer was formed on the carbon nano fibers, in Example 2, using the same carbon nano fibers under the same copper plating condition. However, the copper-plated carbon nano fibers underwent the thermal treatment in an oxygen atmosphere, thereby fabricating composite powders with ceramic powders (oxide) and carbon nano fibers uniformly mixed with each other.

The copper-plated carbon nano fibers were thermally treated under the oxygen atmosphere after being dried. FIG. 4(A) shows the composite material after the thermal treatment of the carbon nano fibers coated with the copper layer under the oxygen atmosphere, and FIG. 4(B) is a composition analysis result of the fabricated powder by using of an energy dispersive spectroscopy (EDS). It can be seen that the composite material, in which copper oxide (CuₓO) particles were uniformly mixed with carbon nano fibers, were fabricated.

### Example 3

In the third example, after creating a nano composite material having uniformly mixed carbon nano fibers and copper nanoparticles under the same conditions as those in Example 1, another type of metallic particles were added to the nano composite material, thereby fabricating a composite material.

Nickel (Ni) metallic particles were added to the nano composite powders, as shown in FIG. 3(C), fabricated in Example 1, and stirred. FIG. 5 shows an electronic microscopic image of the composite material after the stirring. Referring to FIG. 5, it can be noticed that the carbon nano fibers, the copper nanoparticles and the nickel metallic particles were uniformly mixed together.

The foregoing embodiments and advantages are merely exemplary and are not to be construed as limiting the present disclosure. The present teachings can be readily applied to other types of apparatuses. This description is intended to be illustrative, and not to limit the scope of the claims. Many alternatives, modifications, and variations will be apparent to those skilled in the art.

The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be construed broadly within the scope as defined in the appended claims.

## Claims

1. A method for fabricating a composite material comprising:
(1) coating a uniform metal layer on nano carbon, wherein the uniformly coated metal layer has a thickness in the range of 10 nm to 1 *µ*m;
(2) fabricating composite nano powders by performing a thermal treatment for the metal layer-coated nano carbon, wherein metallic nano powders are formed on the surface of the nano carbon after the thermal treatment for the metal layer-coated nano carbon; and
(3) sintering the composite nano powders.

2. The method of claim 1, further comprising, prior to step (1), dispersing the nano carbon by using a dispersing agent, an ultrasonic stirring or a combination thereof.

3. The method of claim 1, further comprising, after step (2), performing the thermal treatment under a reductive gaseous atmosphere to remove an oxide layer generated on the surfaces of the composite nano powders at step (2).

4. The method of claim 1, wherein the thermal treatment is performed under a vacuum or inactive gaseous atmosphere to create metallic nanoparticles, or performed under a nitrogen, oxygen, fluoric or chloric atmosphere to create ceramic nanoparticles.

5. The method of claim 4, further comprising, after step (2), adding metallic or ceramic nano particles, the particles being the same type as or a different type from the metal of step (1).

6. The method of claim 1, wherein the nano carbon is at least one selected from a group consisting of carbon nanotube, carbon nanorod, graphene and carbon nano fiber.

7. The method of claim 1, wherein the metal is at least one selected from a group consisting of copper, nickel, gold, silver, platinum, titanium, zinc, manganese and gallium.

8. The method of claim 1, wherein a volume ratio of the metal to the nano carbon in the composite nano powder is in the range of 99.99 : 0.01 to 50 : 50.

9. The method of claim 1, wherein the coating is executed by electroless plating, electroplating, sputtering, deposition or chemical vapor deposition.

10. The method of claim 1, wherein the sintering is a thermal treatment after cold forming or hot forming, or a spark plasma sintering.

## Patentansprüche

1. Verfahren zur Herstellung eines Verbundwerkstoffs, umfassend:
(1) Aufbringen einer Beschichtung in Form einer gleichmäßigen Metallschicht auf Nanokohlenstoff, wobei die gleichmäßig aufgebrachte Metallschicht eine Dicke im Bereich von 10 nm bis 1 µm aufweist;
(2) Herstellen von Komposit-Nanopulvern durch Ausführen einer thermischen Behandlung für den mit der Metallschicht beschichteten Nanokohlenstoff, wobei nach der thermischen Behandlung für den mit der Metallschicht beschichteten Nanokohlenstoff auf der Oberfläche des Nanokohlenstoffs metallische Nanopulver ausgebildet sind; und
(3) Sintern der Komposit-Nanopulver.

2. Verfahren nach Anspruch 1, ferner umfassend, vor Schritt (1), das Dispergieren des Nanokohlenstoffs mittels eines Dispergiermittels, durch Ultraschallrühren oder durch eine Kombination dieser.

3. Verfahren nach Anspruch 1, ferner umfassend, nach Schritt (2), das Ausführen der thermischen Behandlung unter einer reduzierenden gashaltigen Atmosphäre, um eine Oxidschicht zu entfernen, die in Schritt (2) auf den Oberflächen der Komposit-Nanopulver erzeugt wird.

4. Verfahren nach Anspruch 1, wobei die thermische Behandlung unter Vakuum oder unter einer inaktiven gashaltigen Atmosphäre erfolgt, um metallische Nanopartikel zu erzeugen, oder unter einer Stickstoff-, Sauerstoff-, Fluor- oder Chloratmosphäre erfolgt, um keramische Nanopartikel zu erzeugen.

5. Verfahren nach Anspruch 4, ferner umfassend, nach Schritt (2), das Zugeben von metallischen oder keramischen Nanopartikeln, wobei die Partikel von der gleichen Art sind wie das Metall aus Schritt (1) oder von anderer Art.

6. Verfahren nach Anspruch 1, wobei der Nanokohlenstoff mindestens einer ausgewählt aus einer Gruppe ist, die aus Kohlenstoff-Nanoröhrchen, Kohlenstoff-Nanostäbchen, Graphen und Kohlenstoff-Nanofasern besteht.

7. Verfahren nach Anspruch 1, wobei das Metall mindestens eines ausgewählt aus einer Gruppe ist, die aus Kupfer, Nickel, Gold, Silber, Platin, Titan, Zink, Mangan und Gallium besteht.

8. Verfahren nach Anspruch 1, wobei ein Volumenverhältnis des Metalls zu dem Nanokohlenstoff in dem Komposit-Nanopulver im Bereich von 99,99:0,01 bis 50:50 liegt.

9. Verfahren nach Anspruch 1, wobei die Beschichtung durch außenstromlose Beschichtung, Galvanisieren, Sputtern, Abscheidung oder chemische Gasphasenabscheidung erfolgt.

10. Verfahren nach Anspruch 1, wobei das Sintern eine thermische Behandlung nach Kaltumformung oder Warmumformung oder ein Spark-Plasma-Sintern umfasst.

## Revendications

1. Procédé de fabrication d'un matériau composite comprenant :
(1) le revêtement d'une couche métallique uniforme sur du nanocarbone, où la couche métallique revêtue uniformément a une épaisseur dans la plage de 10 nm à 1 µm ;
(2) la fabrication de nanopoudres composites en réalisant un traitement thermique du nanocarbone revêtu d'une couche métallique, où les nanopoudres métalliques sont formées sur la surface du nanocarbone après le traitement thermique du nanocarbone revêtu d'une couche métallique ; et
(3) le frittage des nanopoudres composites.

2. Procédé selon la revendication 1, comprenant en outre, avant l'étape (1), la dispersion du nanocarbone en utilisant un agent de dispersion, une agitation ultrasonore ou une de leurs combinaisons.

3. Procédé selon la revendication 1, comprenant en outre, après l'étape (2), la réalisation du traitement thermique sous une atmosphère gazeuse réductrice pour enlever une couche d'oxyde produite sur les surfaces des nanopoudres composites à l'étape (2).

4. Procédé selon la revendication 1, dans lequel le traitement thermique est réalisé sous vide ou sous une atmosphère gazeuse inactive pour créer des nanoparticules métalliques, ou réalisé sous une atmosphère d'azote, d'oxygène, fluorique ou chlorique pour créer des nanoparticules de céramique.

5. Procédé selon la revendication 4, comprenant en outre, après l'étape (2), l'addition de nanoparticules métalliques ou céramiques, les particules étant du même type ou d'un type différent du métal de l'étape (1).

6. Procédé selon la revendication 1, dans lequel le nanocarbone est au moins l'un choisi dans le groupe constitué par un nanotube de carbone, une nanotige de carbone, du graphène et une nanofibre de carbone.

7. Procédé selon la revendication 1, dans lequel le métal est au moins l'un choisi dans un groupe constitué par le cuivre, le nickel, l'or, l'argent, le platine, le titane, le zinc, le manganèse et le gallium.

8. Procédé selon la revendication 1, dans lequel un rapport en volume du métal au nanocarbone dans la nanopoudre composite se situe dans la plage de 99,99:0,01 à 50:50.

9. Procédé selon la revendication 1, dans lequel le revêtement est exécuté par placage sans électrolyse, électroplacage, pulvérisation, dépôt ou dépôt chimique en phase vapeur.

10. Procédé selon la revendication 1, dans lequel le frittage est un traitement thermique après le formage à froid ou le formage à chaud, ou un frittage par plasma à étincelle.
